(19) **Europäisches Patentamt / European Patent Office / Office européen des brevets**

(11) **EP 2 645 825 A1**

(12) # DEMANDE DE BREVET EUROPEEN

(43) Date de publication:
**02.10.2013 Bulletin 2013/40**

(51) Int Cl.:
*H05H 1/36* (2006.01)     *H05H 1/34* (2006.01)
*B23K 10/00* (2006.01)

(21) Numéro de dépôt: **13152493.6**

(22) Date de dépôt: **24.01.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **27.03.2012 FR 1252702**

(71) Demandeur: **AIR LIQUIDE WELDING FRANCE 75007 Paris (FR)**

(72) Inventeur: **Renault, Thierry 95640 MARINES (FR)**

(74) Mandataire: **Pittis, Olivier L'Air Liquide, S.A., Direction de la Propriété Intellectuelle, 75, Quai d'Orsay 75321 Paris Cedex 07 (FR)**

(54) **Procédé de contrôle de l'extinction de l'arc électrique d'une torche à plasma d'arc**

(57) L'invention concerne un procédé de contrôle de l'extinction de l'arc électrique d'une torche à plasma d'arc (10) alimentée en courant électrique et comprenant une électrode (1) et une tuyère amont (2) entre lesquelles est établie ou lesquelles sont soumises à au moins une différence de potentiel électrique et formant entre elles une chambre d'arc (3) alimentée en gaz plasmagène (4), le procédé comprenant les étapes de couper l'alimentation en gaz plasmagène (4) de la chambre d'arc (3), faire s'échapper le gaz plasmagène (4) en amont de la chambre d'arc (3), diminuer progressivement l'intensité du courant d'alimentation de la torche (10). Selon l'invention, le procédé comprend en outre les étapes de mesurer plusieurs valeurs de différence de potentiel électrique entre l'électrode (1) et la tuyère amont (2) pendant plusieurs périodes temporelles successives, comparer au moins une première valeur de différence de potentiel avec au moins une deuxième valeur de potentiel et déterminer la présence d'un front de montée (5) de la différence de potentiel, et déclencher l'arrêt du courant d'alimentation de la torche (10) dès la détermination d'un front de montée (5). Procédé de coupage par plasma d'arc associé et installation pour la mise en oeuvre dudit procédé.

Figure 2

EP 2 645 825 A1

**Description**

L'invention concerne un procédé d'extinction de l'arc électrique d'une torche de coupage à plasma d'arc permettant d'améliorer la durée de vie des consommables de la torche et ce, quels que soient la configuration et/ou les paramètres de fonctionnement de la torche à plasma d'arc, ainsi qu'un procédé de coupage par plasma d'arc mettant en oeuvre ledit procédé d'extinction et une installation de coupage par plasma d'arc apte à mettre en oeuvre ledit procédé de coupage.

Les performances, c'est-à-dire qualité et vitesse de coupe, des installations et procédés de découpe des aciers par plasma d'arc sont fortement liées à l'état d'usure de l'électrode et de la tuyère amont équipant la torche à plasma d'arc utilisée.

Une opération de coupage par plasma d'arc d'une pièce métallique comprend habituellement une phase d'amorçage, c'est-à-dire d'allumage de l'arc électrique dans la torche, une phase de coupage et une phase d'arrêt de la torche.

L'électrode et la tuyère amont d'une torche à plasma d'arc sont reliées électriquement à un générateur de courant électrique. L'électrode, ou cathode, est directement reliée à la borne négative du générateur et la tuyère amont, ou anode, est initialement reliée à la borne positive du générateur de courant électrique via une impédance, généralement de quelques Ohms.

Au cours de la phase d'amorçage, on alimente le volume compris entre la surface externe de l'électrode et la surface interne de la tuyère amont, formant la chambre d'arc, en gaz plasmagène. Un arc électrique est amorcé grâce à l'application d'une tension électrique continue de 500 V environ, correspondant à la tension à vide du générateur, à laquelle est superposé un potentiel électrique haute tension (de l'ordre de 10 kV) en haute fréquence (de l'ordre de 10 kHz) entre l'électrode et la tuyère amont. Il se forme alors un arc électrique entre l'électrode et la tuyère amont, appelé arc pilote.

Dès que l'arc pilote est détecté par le générateur électrique, le potentiel électrique haute tension et haute fréquence est arrêté. Le gaz plasmagène introduit dans la chambre d'arc est alors ionisé par l'arc pilote. De plus, dès sa formation, l'arc pilote est soufflé en dehors de la torche à plasma d'arc par un flux de gaz plasmagène alimentant la chambre d'arc, lequel arc est transféré à la pièce métallique à découper.

Cette dernière est directement reliée au pôle positif du générateur de courant. Dès la détection du transfert de l'arc pilote de la tuyère amont vers la pièce métallique à découper, la tuyère amont est immédiatement déconnectée du pôle positif du générateur. Ceci force l'arc à rester électriquement connecté à la pièce métallique. La tuyère amont devient électriquement flottante, c'est-à-dire qu'elle n'est pas reliée à un circuit électrique.

Il s'ensuit l'établissement, entre la tuyère amont et l'électrode, d'une différence de potentiel électrique. Cette dernière dépend de la géométrie et de l'usure de la chambre d'arc, du courant électrique, du débit massique, donc de la pression, du gaz plasmagène, de la nature dudit gaz et enfin de la stabilité de l'arc dans la chambre d'arc.

Durant la phase de coupage, le flux de gaz plasmagène traversant la chambre d'arc est ionisé dans l'arc électrique établi entre l'électrode et la pièce à découper. La constriction de l'arc, c'est-à-dire sa concentration sur une surface de section réduite, est obtenue lors du passage de l'arc dans le canal de la tuyère amont. Il s'ensuit l'éjection d'un jet de plasma d'arc par la tuyère amont de la torche, dont la forte densité de puissance permet de fondre le matériau constitutif de la pièce à découper.

Une fois la découpe de la pièce métallique achevée, on procède à l'arrêt de la torche à plasma d'arc, c'est-à-dire à l'extinction de l'arc électrique dans la torche, jusqu'à sa coupure, c'est-à-dire la coupure du courant d'alimentation de la torche.

Le corps de l'électrode est habituellement en cuivre ou en un alliage de cuivre. Par ailleurs, un pion ou insert en matériau thermo-émissif, en général du hafnium, compatible avec un gaz plasmagène oxydant est inséré dans ce corps d'électrode.

L'usure de l'électrode se produit principalement lors de l'extinction de l'arc électrique. En effet, lors de cette extinction, le gaz plasmagène se refroidit très vite, sa densité (exprimée en $kg/m^3$) augmente et sa quantité de mouvement devient alors très importante.

Or, pendant ce temps, le pion ou insert en hafnium dont la surface a été liquéfiée par l'échauffement créé par l'arc électrique pendant l'utilisation de la torche à plasma, ne se solidifie que très lentement.

L'augmentation de la quantité de mouvement du gaz plasmagène en contact avec le hafnium encore liquide a alors pour effet d'arracher et d'entraîner des gouttelettes de hafnium liquide.

Ce mécanisme d'usure de l'électrode est donc une lutte entre la cinétique thermique lente du pion de hafnium et la dynamique plus rapide du gaz plasmagène imposée par l'extinction de l'arc.

Ce mécanisme d'usure peut être drastiquement réduit en limitant la quantité de mouvement du gaz plasmagène. Pour cela, au moment de l'arrêt de la torche, la pression de gaz plasmagène dans la chambre d'arc doit être réduite au minimum, c'est-à-dire à la valeur minimum permettant de maintenir la stabilité de l'arc.

Pour ce faire, l'arrêt de la torche peut être opéré comme décrit par le document US- A- 5, 070, 227, qui préconise de réduire le courant d'arc selon une rampe et, en même temps, d'arrêter l'alimentation en gaz plasmagène de la chambre d'arc. Pour cela, on procède en général à la fermeture de l'électrovanne d'admission du gaz plasmagène dans la chambre d'arc, simultanément au début de la rampe de réduction du courant. L'arc est alors éteint lorsque la pression dans la chambre d'arc est suffisamment basse pour limiter l'usure des consommables mais suffisamment haute pour éviter l'accrochage de l'arc sur les parois de la chambre d'arc.

De plus, afin d'accélérer cette baisse de pression, il est prévu un dispositif d'évacuation à l'air libre qui permet d'évacuer le gaz compris entre le système de gestion de l'alimentation de la torche en gaz et la chambre d'arc, par exemple un orifice d'échappement à l'atmosphère dont l'ouverture est contrôlée par une électrovanne.

Cependant, ce type de procédé présente certains inconvénients qui compliquent sa mise en oeuvre au plan industriel.

En effet, ce type de procédé nécessite une synchronisation parfaite entre l'évacuation du gaz plasmagène de la chambre d'arc et la rampe de courant d'arc. Classiquement, cette synchronisation est obtenue en échappant une quantité fixe de gaz plasmagène entre l'électrovanne d'admission du gaz plasmagène dans la torche à plasma d'arc et la chambre d'arc pendant un temps fixé.

Or, la quantité de gaz échappé dépend du volume des conduits de gaz entre l'électrovanne d'admission et la chambre d'arc, du temps d'échappement, c'est- à- dire le temps pendant lequel l'électrovanne d'échappement est ouverte et l'électrovanne d'admission est fermée, ainsi que de la pression du gaz. Cette dernière dépend principalement de l'intensité du courant d'arc et de l'épaisseur de la tôle à couper.

Le temps nécessaire à la baisse de pression dans la chambre d'arc dépend également des géométries de la chambre d'arc et du canal de sortie de la tuyère amont, de l'intensité du courant d'arc, de la perte de charge associée à l'évacuation du gaz, de la pression de ce dernier dans les conduits à vider et du volume des conduits.

Ainsi, pour chaque application, c'est- à- dire pour chaque jeu de paramètres de coupe choisis selon l'épaisseur de tôle ou encore le type de matériau à couper, un temps prédéterminé correspondant à la durée de la rampe appliquée au courant d'arc en fin de cycle, c'est- à- dire à la fin de la phase de coupage doit être entré dans le système de gestion du cycle plasma, c'est- à- dire le système gérant la rampe de l'allumage et de l'extinction de l'arc, l'admission des gaz dans la torche à plasma d'arc ainsi que la synchronisation entre le courant d'arc et la pression de gaz dans la chambre d'arc. Ce temps fait partie des paramètres de réglage usine de l'installation de coupage plasma, prédéterminé en fonction de l'application visée, c'est- à- dire le matériau ou encore l'épaisseur de la tôle à couper.

Ceci complexifie la mise en oeuvre industrielle du procédé de coupage par plasma d'arc, au cours de laquelle l'utilisateur peut avoir besoin de changer plus ou moins régulièrement les paramètres de coupe, notamment la pression de gaz plasmagène, afin par exemple d'améliorer la qualité de coupe.

De plus, pour mettre en oeuvre aisément un arrêt de la torche à plasma d'arc selon le type de méthode décrit dans l'art antérieur, il est préférable que les configurations de la torche, de son système d'alimentation en gaz et de l'installation de coupage plasma en général, soit figées.

Malheureusement, une configuration de torche à plasma d'arc figée n'est pas non plus facile à mettre en oeuvre sur une installation industrielle, souvent conçue de manière à répondre à une demande spécifique, c'est- à- dire des performances industrielles particulières, par exemple en termes de vitesse ou de qualité de coupe pour un ou des types de pièces à couper données. Par exemple, en cas de changement de la longueur de la canalisation d'amenée du gaz plasmagène jusqu'à la torche, ce qui est souvent nécessaire pour s'adapter à l'espace disponible avant implantation de l'installation de coupage plasma, la durée prédéterminée de la rampe appliquée au courant d'arc en fin de cycle n'est plus optimale.

Il s'ensuit qu'assurer une durée de vie importante des consommables peut se révéler problématique car incompatible avec ladite demande spécifique.

Ainsi, si la pression du gaz plasmagène à évacuer ou si le volume du conduit de gaz entre l'électrovanne d'admission et la chambre d'arc viennent à changer, alors l'extinction de l'arc électrique n'a plus lieu dans des conditions optimales, c'est- à- dire qu'il reste trop ou pas assez de gaz dans la chambre d'arc au moment de la coupure de l'arc, ce qui impacte alors négativement la durée de vie des consommables. Notamment, deux types de mécanismes contribuent grandement à la réduction de la durée de vie des consommables :

● D'une part, une augmentation de la quantité de gaz à échapper, alors que le temps d'échappement reste fixe, conduit à une usure accélérée de l'électrode par une éjection d'hafnium et/ou d'oxyde d'hafnium au moment de la coupure de l'arc.

● D'autre part, une diminution de la quantité de gaz à échapper, alors que le temps d'échappement reste fixe, conduit à une usure de la sortie du canal de la tuyère amont due à un manque de gaz avant la coupure de l'arc qui s'accroche, totalement ou en partie, à la paroi du canal de la tuyère amont.

La présente invention vise donc à résoudre tout ou partie des problèmes d'usure des consommables d'une torche à plasma d'arc mentionnés ci-dessus afin d'obtenir une durée de vie élevée de ces consommables, typiquement au moins 4 heures de temps d'allumage de l'arc électrique, en particulier de l'électrode portant l'insert en hafnium ou analogue, et ce, de manière simple et quelle que soit la configuration et/ou les paramètres de fonctionnement de la torche à plasma d'arc utilisée.

La solution de l'invention est alors un procédé de contrôle de l'extinction de l'arc électrique d'une torche à plasma d'arc, laquelle torche à plasma d'arc est alimentée en courant électrique et comprend une électrode et une tuyère amont entre lesquelles est établie ou lesquelles sont soumises à au moins une différence de potentiel électrique et formant entre elles une chambre d'arc alimentée en gaz plasmagène, comprenant les étapes de :

a) couper l'alimentation en gaz plasmagène de la chambre d'arc,

b) faire s'échapper le gaz plasmagène en amont de la chambre d'arc,

c) diminuer progressivement l'intensité du courant d'alimentation de la torche à plasma d'arc,

caractérisé en ce qu'il comprend en outre les étapes de :

d) mesurer plusieurs valeurs ($D(T_{i-2})$, $D(T_{i-1})$, $D(T_i)$...) de différence de potentiel électrique entre l'électrode et la tuyère amont pendant plusieurs périodes temporelles successives ($T_{i-2}$, $T_{i-1}$, $T_i$...),

e) comparer au moins une première valeur $D(T_i)$ mesurée pendant la période $T_i$ avec au moins une deuxième valeur $D(T_{i-2})$ mesurée pendant la période $T_{i-2}$ et déterminer la présence d'un front de montée de la différence de potentiel électrique entre l'électrode et la tuyère amont, et

f) déclencher l'arrêt du courant d'alimentation de la torche dès la détermination d'un front de montée de la différence de potentiel électrique entre l'électrode et la tuyère amont.

Par ailleurs, selon le mode de réalisation considéré, l'invention peut comprendre l'une ou plusieurs des caractéristiques suivantes :

- on détermine la présence d'un front de montée de la différence de potentiel électrique entre l'électrode et la tuyère amont lorsque le rapport $D(T_i)/D(T_{i-2})$ est supérieur ou égal à un seuil de détection prédéterminé X.
- le seuil de détection X est au moins égal à 1,1, de préférence au moins égal à 1,5.
- on détermine la présence d'un front de montée de la différence de potentiel électrique entre l'électrode et la tuyère amont lorsque le rapport $D(T_i)- D(T_{i-2})/(T_i- T_{i-2})$ est supérieur ou égal à un seuil de détection prédéterminé Y.
- le seuil de détection Y est compris entre 100 et 10000, de préférence compris entre 200 et 7000.
- le seuil de détection Y est compris entre 100 et 500, de préférence de l'ordre de 250, ou compris entre 4000 et 9000, de préférence de l'ordre de 6000.
- les périodes temporelles successives ($T_{i-2}$, $T_{i-1}$, $T_i$...) sont chacune comprises entre 0.05 et 15 ms.
- les périodes temporelles successives ($T_{i-2}$, $T_{i-1}$, $T_i$...) sont chacune comprises entre 0.1 et 10 ms, de préférence entre 1 et 5 ms.
- les valeurs de différence de potentiel ($D(T_{i-2})$, $D(T_{i-1})$, $D(T_i)$ ...) mesurées à l'étape d) résultent chacune d'une moyenne effectuée sur plusieurs valeurs intermédiaires ($d_{j-1}(T_i)$, $d_j(T_i)$, ...) de différence de potentiel électrique entre l'électrode et la tuyère amont mesurées pendant chaque période ($T_{i-2}$, $T_{i-1}$, $T_i$...) .
- les valeurs intermédiaires ($d_{j-1}(T_i)$, $d_j(T_i)$, ...) de différence de potentiel entre l'électrode et la tuyère amont sont mesurées pendant chaque période ($T_{i-2}$, $T_{i-1}$, $T_i$...) à une fréquence d'acquisition d'au moins 4 kHz.
- l'intensité du courant d'arc électrique est diminuée selon une rampe.
- les étapes a), b) et c) débutent simultanément.
- les étapes d), e) et f) commencent avec au moins une des étapes a), b) et c).
- la coupure de l'alimentation de la chambre d'arc en gaz plasmagène est opérée par fermeture d'au moins un dispositif d'admission de gaz plasmagène agencé en amont de la torche à plasma d'arc sur une canalisation d'alimentation en gaz reliée fluidiquement à ladite torche.
- l'échappement du gaz plasmagène est opéré au moyen d'au moins un dispositif d'échappement de gaz plasmagène agencé entre le dispositif d'admission de gaz et la chambre d'arc.
- les dispositifs d'admission et d'échappement de gaz plasmagène comprennent au moins une électrovanne.

Selon un autre aspect, l'invention porte aussi sur un procédé de coupage par plasma d'arc d'une pièce métallique, dans lequel on découpe une pièce métallique au moyen d'un plasma d'arc généré par une torche à plasma d'arc, caractérisé en ce qu'une fois la découpe de la pièce métallique achevée, on met en oeuvre un procédé de contrôle de l'extinction de l'arc électrique selon l'invention pour éteindre l'arc électrique de la torche à plasma d'arc.

En outre, l'invention concerne une installation automatique de coupage par plasma d'arc comprenant une alimentation en courant, une source de gaz plasmagène, une torche à plasma d'arc comprenant une électrode et une tuyère amont entre lesquelles est établie une différence de potentiel et formant entre elles une chambre d'arc alimentée en gaz plasmagène, et un système de gestion de l'alimentation de la torche à plasma d'arc en gaz plasmagène, ledit dispositif étant relié fluidiquement à la source de gaz plasmagène et comprenant un dispositif de régulation du débit et/ou de la pression de gaz plasmagène alimentant la torche, au moins un conduit d'amenée du gaz plasmagène jusqu'à la chambre d'arc, un dispositif d'admission de gaz plasmagène agencé en amont de la torche à plasma d'arc, et un dispositif d'échappement de gaz plasmagène agencé entre le dispositif d'admission de gaz plasmagène et la chambre d'arc. Selon l'invention, ladite installation comprend en outre des moyens de mesure de la différence de potentiel entre l'électrode et la tuyère amont reliés électriquement à des moyens d'acquisition et de traitement de signal apte à et conçus pour détecter un front de montée de la différence de potentiel entre l'électrode et la tuyère amont et déclencher l'arrêt du courant d'alimentation de la torche à plasma d'arc.

L'invention va maintenant être mieux comprise grâce à la description détaillée suivante faite en références aux Figures annexées parmi lesquelles :

- la Figure 1 schématise l'électrode et la tuyère amont d'une torche à plasma d'arc,
- la Figure 2 illustre l'architecture typique d'un dispositif de gestion de l'alimentation d'une torche à plasma d'arc en gaz plasmagène,
- la Figure 3 montre des enregistrements effectués au cours d'une extinction de l'arc électrique d'une torche à plasma d'arc opérée dans des conditions optimales,
- la Figure 4 montre des enregistrements effectués au cours d'une extinction de l'arc électrique d'une torche à plasma d'arc opérée dans des conditions où il n'y a pas suffisamment de gaz dans la chambre avant la coupure de l'arc,
- la Figure 5 illustre un mode de réalisation où les valeurs de différence de potentiel résultent chacune de moyennes de plusieurs valeurs intermédiaires, et montre l'évolution temporelles desdites valeurs intermédiaires
- les Figures 6a et 6b illustrent des algorithmes utilisés pour déterminer la présence d'un front de montée selon des modes particuliers de réalisation de l'invention, et
- les Figures 7 et 8a à 8d illustrent des modes de réalisation où les valeurs de différence de potentiel entre l'électrode et la tuyère amont résultent chacune de moyennes de plusieurs valeurs intermédiaires mesurées à différentes fréquence d'acquisition, les moyennes étant effectuées sur différentes périodes temporelles.

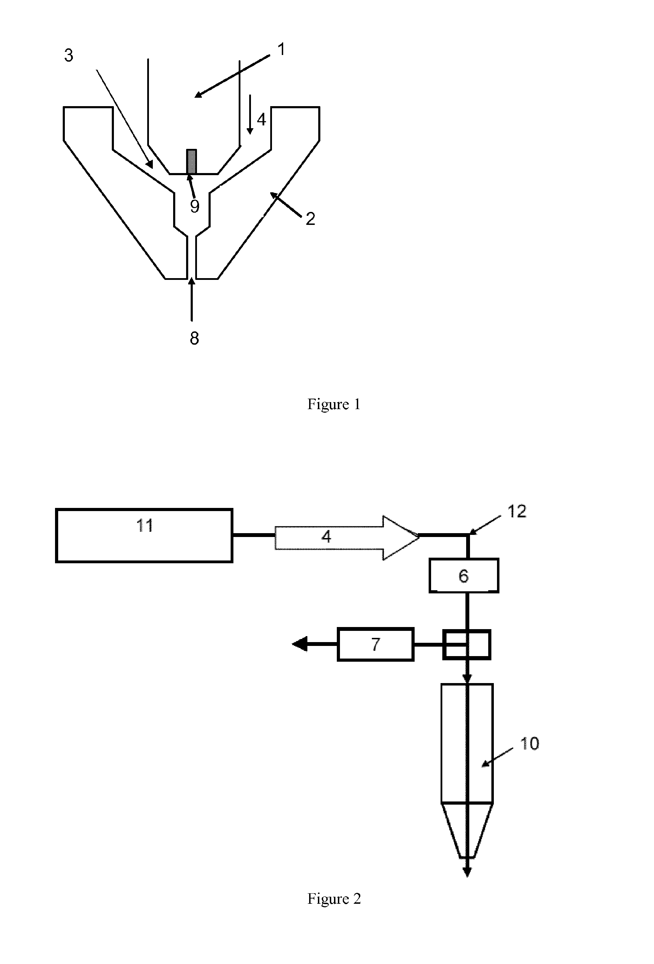

La Figure 1 schématise les composants essentiels contenus dans une torche à plasma d'arc 10, à savoir une électrode 1, munie en son extrémité d'un insert 9 en matériau thermo-émissif et une tuyère amont 2 munie d'un canal de sortie 8. Ces deux composants forment entre eux une chambre d'arc 3, à travers laquelle circule un flux de gaz plasmagène 4, en direction du canal de sortie 8 de la tuyère amont 2. En fonctionnement, c'est-à-dire en phase de coupage, un jet de plasma d'arc est éjecté par le canal 8 de la tuyère amont 2 jusqu'à la pièce à découper positionnée sous la torche 10 (non représentée). Ce jet de plasma d'arc résulte de la combinaison du jet de gaz plasmagène 4 se propageant à travers le canal 8 et de l'arc électrique établi entre l'électrode 1 et la pièce à découper.

Une torche à plasma d'arc 10 est généralement reliée à un dispositif de gestion de l'alimentation de la torche 10 en gaz plasmagène 4. La Figure 2 illustre l'architecture d'un tel système qui est relié à une source de gaz plasmagène 4 (non représentée) et comprend classiquement un dispositif de régulation 11 du débit et/ou de la pression de gaz plasmagène alimentant la torche à plasma d'arc, au moins un conduit 12 d'amenée du gaz plasmagène 4 jusqu'à la torche à plasma d'arc 10, un dispositif d'admission 6 de gaz agencé en amont de la torche à plasma d'arc 10, et un dispositif d'échappement 7 de gaz agencé entre le dispositif d'admission 6 et la chambre d'arc 3.

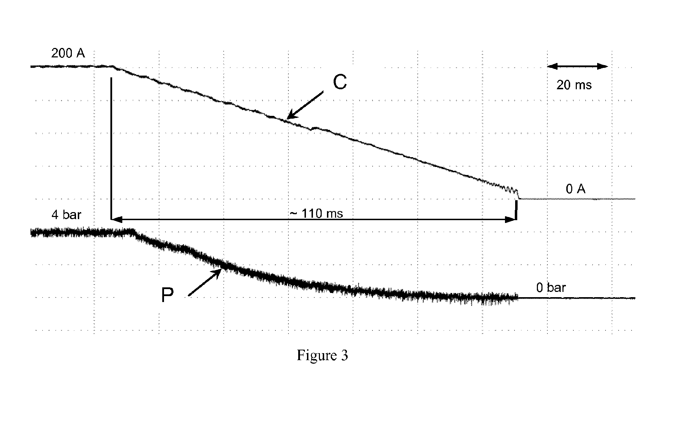

La Figure 3 présente un enregistrement réalisé dans le cadre d'un arrêt d'une torche à plasma d'arc. Dans le cas illustré, l'arc électrique est coupé lorsque la pression dans la chambre d'arc est suffisamment basse pour limiter l'usure des consommables mais suffisamment haute pour éviter l'accrochage de l'arc sur les parois de la chambre d'arc.

Le signal C correspond à l'évolution de l'intensité du courant d'arc au cours du temps et le signal P correspond à l'évolution de la pression mesurée à l'entrée de la torche, en aval de l'électrovanne d'admission. Lors de cet arrêt, l'intensité du courant d'arc, initialement de 200 A, est réduite selon une rampe linéaire avant de procéder à l'arrêt du courant et la pression, initialement de 4 bar, est réduite jusqu'à environ 0 bar, et ce sur une durée de 110 ms.

Comme on le voit, au cours de la phase d'extinction de l'arc électrique d'une torche à plasma d'arc 10, on applique généralement une rampe décroissante au courant d'arc de manière à diminuer progressivement son intensité. La réduction simultanée de la pression dans la chambre d'arc est obtenue en coupant l'alimentation de la chambre d'arc 3 en gaz plasmagène 4, de préférence grâce à la fermeture d'au moins un dispositif d'admission 6 de gaz plasmagène 4 agencé en amont de la torche à plasma d'arc 10, sur une canalisation d'alimentation en gaz reliée fluidiquement à ladite torche, et d'autre part, grâce à l'ouverture d'un dispositif d'échappement 7 du gaz plasmagène 4 agencé entre le dispositif d'admission 6 de gaz et la chambre d'arc 3, comme schématisé sur la Figure 2.

De préférence, les dispositifs d'admission 6 et d'échappement 7 de gaz plasmagène 4 comprennent au moins une électrovanne.

Dans l'exemple présenté, l'intensité du courant d'arc avant la phase d'extinction, est de 200 A, et la pression de gaz plasmagène 4 dans la chambre d'arc 3 est de 4 bar.

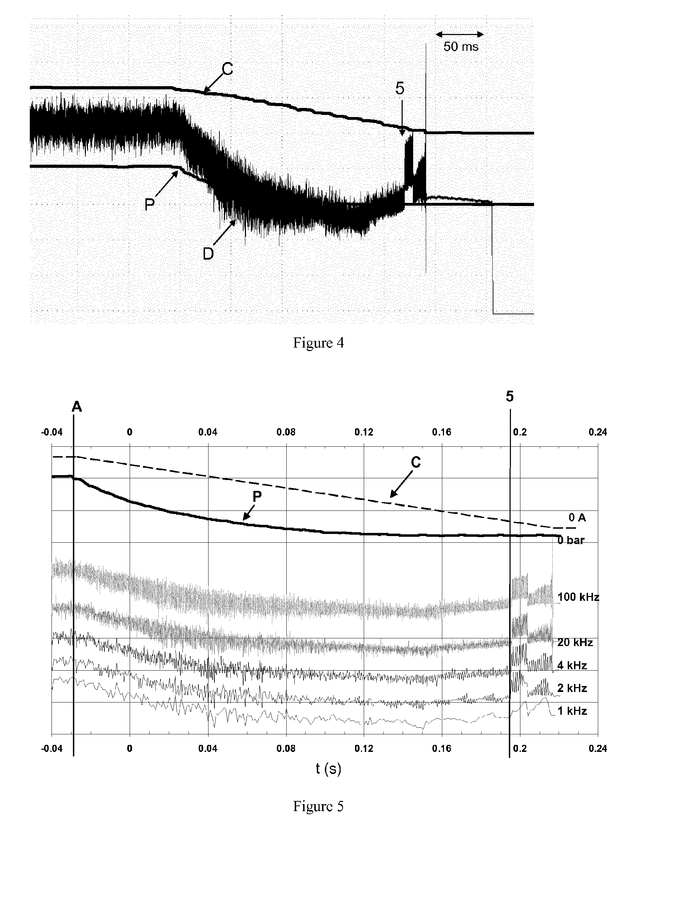

La Figure 4 illustre les signaux enregistrés dans le cas où il n'y a pas assez de gaz plasmagène dans la chambre d'arc en fin du cycle d'extinction de l'arc. L'évolution de l'intensité du courant d'arc (courbe C) et l'évolution de la pression mesurée à l'entrée de la torche (courbe P) y sont représentées avec l'évolution des valeurs de différence de potentiel entre l'électrode 1 et la tuyère amont 2 (courbe D) pendant le temps où la rampe décroissante est appliquée au courant d'arc.

Une telle situation impacte alors négativement la durée de vie des consommables. Notamment, un manque de gaz avant la coupure de l'arc conduit à une usure de la sortie du canal de la tuyère amont car l'arc s'accroche, totalement ou en partie, à la paroi du canal de la tuyère amont.

Le phénomène d'usure de la tuyère amont 2 s'accompagne d'une augmentation de la différence de potentiel électrique entre l'électrode 1 et la tuyère amont 2 pendant un court intervalle de temps. De la même façon, l'usure de l'électrode 1 conduit également à une augmentation de la différence de potentiel électrique entre l'électrode 1 et la tuyère amont 2.

Cette augmentation, également appelée front de montée (localisée par la flèche 5 sur la courbe D dans le cas illustré sur la Figure 4), de la différence de potentiel D mesurée entre l'électrode 1 et la tuyère amont 2 résulte du manque de gaz plasmagène alors que l'arc électrique n'est toujours pas éteint. La rampe de diminution du courant d'arc est donc trop longue, ce qui conduit à une usure accélérée de la tuyère amont 2 car il n'y a plus assez de gaz pour protéger les parois du canal de la tuyère amont 2.

La présente invention vise à résoudre les problèmes d'usure des consommables d'une torche à plasma d'arc et repose sur la détection du front de montée 5. La détermination du moment auquel procéder à l'arrêt du courant d'arc se fait alors en fonction de l'apparition de ce front de montée 5, c'est-à-dire indépendamment de la configuration de l'installation de coupage plasma utilisée ou des paramètres des coupes mis en oeuvre.

Plus précisément, la présente invention propose un procédé d'extinction de l'arc électrique dont le principe est de réduire progressivement l'intensité du courant d'arc, l'intensité étant diminuée de préférence selon une rampe décroissante, de couper l'alimentation de la chambre d'arc 3 en gaz plasmagène 4, de laisser le gaz plasmagène 4 s'échapper avant son entrée dans la chambre d'arc 3 au moyens de dispositifs d'admission 6 et d'échappement 7 de gaz plasmagène 4 et de ne couper, ou arrêter, le courant d'arc électrique, ou de manière équivalente de ne couper l'arc électrique, c'est-à-dire de déclencher l'arrêt du courant d'arc, que lorsque l'on détermine, à partir de la mesure de valeurs de différence de potentiel entre l'électrode 1 et la tuyère amont 2, la présence d'un front de montée avec augmentation des dites valeurs de différence de potentiel entre l'électrode 1 et la tuyère amont 2.

Le procédé de l'invention est de préférence mis en oeuvre avec un dispositif de gestion de l'alimentation d'une torche à plasma d'arc en gaz plasmagène tel qu'illustré dans la Figure 2.

De préférence, les étapes de diminuer progressivement l'intensité du courant d'arc, l'intensité étant diminuée de préférence selon une rampe décroissante, de couper l'alimentation de la chambre d'arc 3 en gaz plasmagène 4, de laisser le gaz plasmagène 4 s'échapper avant son entrée dans la chambre d'arc 3 ont lieu simultanément ou quasi-simultanément.

Selon l'invention, pour déterminer la présence d'un front de montée 5 sur le signal D correspondant à la mesure de l'évolution temporelle des valeurs de différence de potentiel électrique entre l'électrode 1 et la tuyère amont 2, on procède de la manière suivante.

Au cours des étapes susmentionnées de diminution de l'intensité du courant d'arc, de coupure de l'alimentation en gaz de la chambre d'arc 3, et d'échappement du gaz plasmagène 4, on mesure plusieurs valeurs ($D(T_{i-2})$, $D(T_{i-1})$, $D(T_i)$...) de différence de potentiel électrique entre l'électrode 1 et la tuyère amont 2 pendant plusieurs périodes temporelles successives ($T_{i-2}$, $T_{i-1}$, $T_i$...). De préférence, ces périodes temporelles sont égales et se succèdent immédiatement les unes aux autres. On obtient ainsi une évolution temporelle des valeurs de différence de potentiel.

On compare au moins une première valeur $D(T_i)$ mesurée pendant une période temporelle $T_i$ avec au moins une deuxième valeur $D(T_{i-2})$ mesurée pendant une période temporelle $T_{i-2}$ antérieure aux périodes $T_{i-1}$ et $T_i$ et on détermine la présence d'un front de montée 5 de la différence de potentiel électrique avec $D(T_i)$ supérieure à $D(T_{i-2})$.

Dans le cadre de la présente invention, on détermine donc un front de montée avec une augmentation, voire une augmentation significative, de la différence de potentiel électrique entre l'électrode 1 et la tuyère amont 2. De préférence, le front de montée est déterminé avec une augmentation des valeurs de la différence de potentiel se produisant sur un intervalle de temps très court. Avantageusement, au moins une première valeur $D(T_i)$ est significativement supérieure, typiquement de l'ordre de 20 à 30%, à au moins une deuxième valeur $D(T_{i-2})$ mesurée antérieurement, cette augmentation se produisant sur un intervalle de temps allant de préférence de quelques millisecondes à plusieurs dizaines de millisecondes.

Si la comparaison des valeurs $D(T_i)$ et $D(T_{i-2})$ ne conduit pas à la détermination d'un front de montée 5, les étapes de mesure et de comparaison de valeurs de différence de potentiel susmentionnées sont poursuivies pendant des périodes temporelles ultérieures. Si la comparaison des valeurs $D(T_i)$ et $D(T_{i-2})$ ne conduit pas à la détermination d'un front de montée 5, on déclenche l'arrêt du courant d'alimentation de la torche.

Selon un mode de réalisation de l'invention, on détermine la présence d'un front de montée 5 de la différence de potentiel électrique entre l'électrode 1 et la tuyère amont 2 lorsque le rapport $D(T_i)/D(T_{i-2})$ est supérieur ou égal à un seuil de détection prédéterminé X. Le seuil de détection X est au moins égal à 1,1, de préférence au moins égal à 1,5.

Selon un autre mode de réalisation de l'invention, c'est le rapport $D(T_i) - D(T_{i-2}) / (T_i - T_{i-2})$ qui est comparé à un autre seuil de détection Y prédéterminé. En fait, ce rapport correspond à la dérivée de la valeur de la différence de potentiel $D(T_{i-1})$ mesurée pendant la période $T_{i-1}$. Si ce rapport est supérieur ou égal à Y, l'arrêt du courant d'alimentation de la torche est déclenché. La valeur de Y est comprise de préférence entre 100 et 10000, de préférence encore entre 200 et 7000.

Dans le cadre de l'invention, les périodes temporelles successives ($T_{i-2}$, $T_{i-1}$, $T_i$...) sont avantageusement comprises entre 0.1 et 10 ms, de préférence entre 1 et 5 ms. Ces valeurs sont choisies de manière à être inférieures ou du même ordre de grandeur que l'intervalle de temps sur lequel se produit le front de montée 5. Typiquement, le front de montée 5 est un phénomène très rapide qui dure d'environ une milliseconde jusqu'à quelques dizaines de millisecondes.

Au vu de cela, on comprend que la présente invention repose essentiellement par une détection rapide et efficace de l'apparition du front de montée 5 lors de la mesure de la différence de potentiel électrique entre l'électrode 1 et la tuyère amont 2.

Or, la détection du front de montée 5 peut être rendue difficile, notamment lorsque le signal D, qui traduit l'évolution temporelle de la différence de potentiel résultant de la mesure de valeurs de différence de potentiel ($D(T_{i-2})$, $D(T_{i-1})$, $D(T_i)$ ...) à des périodes temporelles successives ($T_{i-2}$, $T_{i-1}$, $T_i$...), est bruité, comme c'est le cas sur la Figure 4. On constate que le signal D présente des fluctuations importantes, c'est-à-dire un rapport signal sur bruit relativement faible. Il devient alors difficile de déterminer de manière fiable la présence d'un front de montée 5 à partir des valeurs de différence de potentiel ($D(T_{i-2})$, $D(T_{i-1})$, $D(T_i)$ ...) .

Dans un mode de réalisation de l'invention, visant à rendre le procédé de l'invention encore plus efficace, les valeurs de différence de potentiel ($D(T_{i-2})$, $D(T_{i-1})$, $D(T_i)$...) mesurées résultent d'une opération de traitement du signal visant à augmenter le rapport signal sur bruit, ledit signal correspondant à l'évolution temporelle des valeurs de différence de potentiel ($D(T_{i-2})$, $D(T_{i-1})$, $D(T_i)$...).

Le bruit étant généralement de type aléatoire, le rapport signal sur bruit peut être augmenté en moyennant plusieurs valeurs intermédiaires de la différence de potentiel mesurées pendant chaque période de temps $T_i$.

De manière alternative, l'augmentation du rapport signal sur bruit peut aussi être obtenue en filtrant le signal en fonction de la fréquence, par exemple au moyen d'un filtre type passe-haut ou passe-bas. Le traitement peut être de type analogique ou numérique.

Selon un mode de réalisation préféré, on utilise la moyenne, cette méthode présentant l'avantage de ne pas conduire à une complexification excessive du système d'acquisition équipant l'installation de coupage plasma.

Chaque valeur de différence de potentiel ($D(T_{i-2})$, $D(T_{i-1})$, $D(T_i)$ ...) mesurée résulte alors d'une moyenne effectuée sur plusieurs valeurs intermédiaires de différence de potentiel électrique mesurées pendant chaque période ($T_{i-2}$, $T_{i-1}$, $T_i$...) . Ainsi, pendant une période temporelle $T_i$, on mesure plusieurs valeurs intermédiaires ($d_{j-1}(T_i)$, $d_j(T_i)$, ...) de différence de potentiel électrique, ses valeurs intermédiaires étant moyennées sur la période $T_i$ de manière à obtenir une valeur de différence de potentiel $D(T_i)$ moyennée. Les valeurs intermédiaires peuvent être moyennées selon différents types de moyennes telles qu'une moyenne quadratique ou une moyenne arithmétique. Dans le cas d'une moyenne arithmétique, l'expression de $D(T_i)$ en fonction de $d_j(T_i)$ est donnée par :

$$D(T_i) = \frac{\sum_{j=1}^{N} d_j(T_i)}{N}$$

N est le nombre de valeurs intermédiaires moyennées pour obtenir chaque valeur $D(T_i)$. Ce nombre N va dépendre de la fréquence d'acquisition des valeurs intermédiaires de différence de potentiel entre l'électrode (1) et la tuyère amont (2) et de la valeur de la période temporelle $T_i$.

La fréquence d'acquisition correspond au nombre de points de mesure de la différence de potentiel enregistrés par unité de temps. Par exemple, une fréquence d'acquisition de 1 kHz correspond à l'acquisition de 1 point, ou 1 mesure, par ms. Plus la fréquence d'acquisition est élevée, meilleure est la détection d'un événement de courte durée.

De préférence, les valeurs intermédiaires de différence de potentiel entre l'électrode (1) et la tuyère amont (2) sont mesurées pendant chaque période ($T_{i-2}$, $T_{i-1}$, $T_i$...) à une fréquence d'acquisition d'au moins 4 kHz.

Avantageusement, on utilise une fréquence de l'ordre de 100 kHz pour une détermination encore plus précise et rapide du front de montée 5, et une réduction, voire une élimination complète, du phénomène d'usure de la tuyère lors de l'extinction de l'arc.

Dans les cas où l'on ne souhaite pas augmenter de manière trop importance la capacité du dispositif d'acquisition de l'installation de coupage plasma, et par là-même son coût, on utilise de préférence une fréquence d'acquisition inférieure à 100 kHz, de préférence de 4 kHz. Cette fréquence représente un bon compromis entre fiabilité et rapidité de la détermination du front de montée.

Bien entendu, des fréquences d'acquisition plus élevées peuvent être utilisées pour une localisation encore plus précise du front de montée 5 si cela s'avère nécessaire.

Ainsi, pour une fréquence d'acquisition d'au moins 4 kHz, plusieurs valeurs intermédiaires de différence de potentiel entre l'électrode (1) et la tuyère amont (2) sont mesurées pendant chaque période ($T_{i-2}$, $T_{i-1}$, $T_i$...) à un intervalle de temps de 0.25 ms au plus.

Le choix de la fréquence d'acquisition de ces valeurs intermédiaires est gouverné par le fait que la détection de ce front de montée 5 doit déclencher instantanément ou quasi-instantanément, c'est-à-dire de manière très rapide, l'arrêt du courant d'alimentation de la torche et par conséquent la coupure de l'arc électrique de la torche. Par ailleurs, le front de montée 5 est un phénomène très rapide et dure d'environ une milliseconde jusqu'à quelques dizaines de millisecondes. La fréquence d'acquisition, c'est-à-dire la fréquence à laquelle est effectuée la mesure des valeurs intermédiaires de différence de potentiel au cours de la phase d'extinction de l'arc, est donc un facteur très important.

Sur la Figure 5, les courbes annotées 1, 2, 4, 20 et 100 kHz montre par exemple les enregistrements de signaux correspondant à des mesures de plusieurs valeurs intermédiaires successives de la différence de potentiel entre l'électrode 1 et la tuyère amont 2 mesurée au cours de l'arrêt d'une torche à plasma d'arc 10, avec des fréquences d'acquisition de 1, 2, 4, 20 et 100 kHz.

Le déclenchement du début de la diminution du courant d'arc (C) et de la pression en gaz plasmagène (P) au cours du temps t est localisé temporellement par la droite A. Le front de montée est localisé temporellement par la droite 5.

Dans le cas où les valeurs de différences de potentiel résulte d'une opération de moyenne de plusieurs valeurs intermédiaires de la différence de potentiel entre l'électrode 1 et la tuyère amont 2, les dites valeurs intermédiaires étant mesurées à une fréquence d'acquisition donnée et moyennées sur une période temporelle $T_i$, il est important d'utiliser un couple (fréquence d'acquisition et période temporelle) permettant d'effectuer chaque moyenne sur un nombre suffisamment important de points de mesure de la différence de potentiel.

En effet, l'aspect déterminant est le nombre de points nécessaires à cette moyenne. Une vingtaine de points s'avère être un minimum pour détecter le front de montée avec un retard acceptable, c'est-à-dire un retard permettant de réduire le phénomène d'usure de la tuyère. L'utilisation de seulement quelques points, typiquement moins de 10 points, peut conduire à une valeur sensible au bruit, c'est-à-dire des points mesurés non significatifs.

A titre d'exemple, si la moyenne effectuée sur plusieurs valeurs intermédiaires est calculée sur une période temporelle $T_i$ de 1ms, et que la fréquence d'acquisition des valeurs intermédiaires de différence de potentiel est de 100 kHz, cela signifie que la moyenne est effectuée sur 100 points de mesure, ce qui est suffisant pour une détermination fiable du front de montée. Si la fréquence d'acquisition est de 100 kHz et la période temporelle $T_i$ de 5 ms, le nombre de point pour effectuer les moyennes est de 500.

Par contre, si la fréquence d'acquisition est de 4 kHz et que la moyenne est effectuée sur une période $T_i$ de 1 ms, la moyenne n'est effectuée que sur 4 points, ce qui est insuffisant. Il est alors nécessaire d'augmenter la période $T_i$, typiquement à au moins 5 ms, ce qui conduit à effectuer une moyenne sur un nombre N d'au moins 20 points.

Typiquement, chaque moyenne de plusieurs valeurs intermédiaires est effectuée sur une période ($T_{i-2}$, $T_{i-1}$, $T_i$...) comprise entre 0.05 et 15 ms, de préférence comprise entre 0.1 et 10 ms, de préférence encore entre 1 et 5 ms.

Ainsi, dans le cas où les valeurs de différences de potentiel résulte d'une opération de moyenne de plusieurs valeurs intermédiaires, le nombre N de valeurs intermédiaires moyennées est avantageusement au moins égal à 4, de préférence au moins égal à 20.

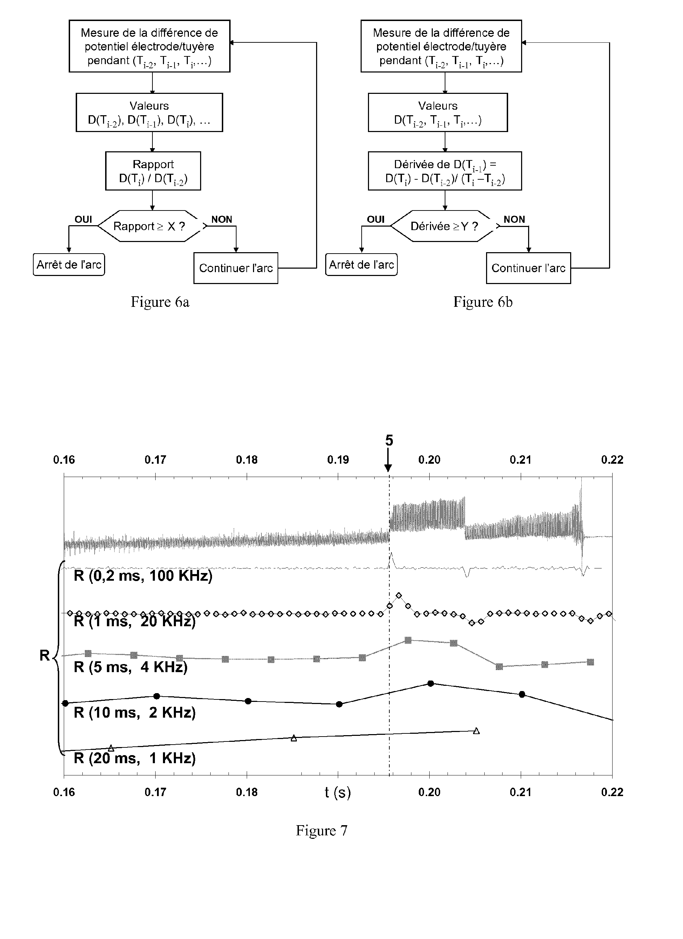

Selon un mode particulier de réalisation de l'invention, on applique le mode de détermination du front de montée détaillé ci- dessus et schématisé sur la Figure 6a. Pour chaque valeur D ($T_{i-2}$), D ($T_{i-1}$), D ($T_i$) ... mesurée, si le rapport des moyennes D ($T_i$) /D ($T_{i-2}$) est supérieur ou égal à X, on déclenche l'arrêt du courant d'alimentation de la torche. Si le rapport des moyennes M ($t_i$) / M ($t_{i-2}$) est inférieur à X, les étapes susmentionnées sont réitérées à au moins une période temporelle ultérieure.

Selon un autre mode particulier de réalisation de l'invention, schématisé sur la Figure 6b, c'est le rapport D ($T_i$)- D ($T_{i-2}$) / ($T_i$- $T_{i-2}$) qui est comparé à un autre seuil de détection Y prédéterminé. En fait, ce rapport correspond à la dérivée de la valeur de la différence de potentiel D ($T_{i-1}$) mesurée pendant la période $T_{i-1}$. Si ce rapport est supérieur ou égal à Y, l'arrêt du courant d'alimentation de la torche est déclenché. S'il est inférieur à Y, les étapes susmentionnées sont réitérées à au moins une période temporelle ultérieure. La valeur de Y est comprise de préférence entre 100 et 10000, de préférence encore entre 200 et 7000.

Dans le cadre de la présente invention, les valeurs de différences de potentiel $D(T_{i-2})$, $D(T_{i-1})$, $D(T_i)$... peuvent donc tout aussi bien résulter de mesures brutes, c'est-à-dire sans aucun traitement supplémentaire, de la différence de potentiel entre l'électrode 1 et la tuyère amont 2, ou résulter chacune d'une moyenne effectuée sur plusieurs valeurs intermédiaires.

Cet algorithme n'est pas le seul à conduire à une détection efficace du front de montée 5 et donc du moment d'arrêt de l'arc électrique d'une torche à plasma d'arc. Mais il présente l'avantage d'être simple à mettre en oeuvre et de conduire à un traitement du signal simple, rapide et reproductible.

Toujours dans le cas où les valeurs de différences de potentiel résulte d'une opération de moyenne de plusieurs valeurs intermédiaires de la différence de potentiel entre l'électrode 1 et la tuyère amont 2, la valeur du seuil de détection Y dépend de la fréquence d'acquisition de ces valeurs intermédiaires et de la durée des périodes temporelles sur lesquelles sont effectuées les moyennes $M(T_i)$....

Dans un mode particulier de réalisation, Y est compris entre 100 et 500, de préférence de l'ordre de 250. Ces valeurs de Y sont particulièrement avantageuses pour une fréquence d'acquisition de 4 kHz et des moyennes effectuées sur des périodes $T_{i-2}$, $T_{i-1}$, $T_i$ d'une durée de 5 ms.

Dans un autre mode particulier de réalisation, Y est compris entre 4000 et 9000, de préférence encore de l'ordre de 6000. Ces valeurs de Y sont particulièrement avantageuses pour une fréquence d'acquisition de la différence de potentiel entre l'électrode 1 et la tuyère amont 2 est de 100 kHz et des moyennes effectuées sur des périodes $T_{i-2}$, $T_{i-1}$, $T_i$ d'une durée de 0.2 ms.

Selon la présente invention, la durée des périodes temporelles et la fréquence d'acquisition des valeurs intermédiaires de différence de potentiel sont avantageusement définies pour conduire à un minimum de 20 points de mesures intermédiaires de la différence de potentiel pour effectuer la moyenne.

Afin de confirmer la durée des périodes temporelles et la fréquence d'acquisition des valeurs intermédiaires de différence de potentiel nécessaire à une détection fiable du front de montée, en particulier en utilisant le procédé illustré sur la Figure 6a, des essais de détermination du front de montée au cours de la phase d'arrêt d'une torche à plasma d'arc classique ont été réalisés avec différentes périodes temporelles de mesure et différente fréquences d'acquisition. Lors de ces essais, l'intensité du courant d'arc avant la phase d'extinction de l'arc était de 130 A et la pression de gaz plasmagène 4 dans la chambre d'arc 3 était de 5,5 bar.

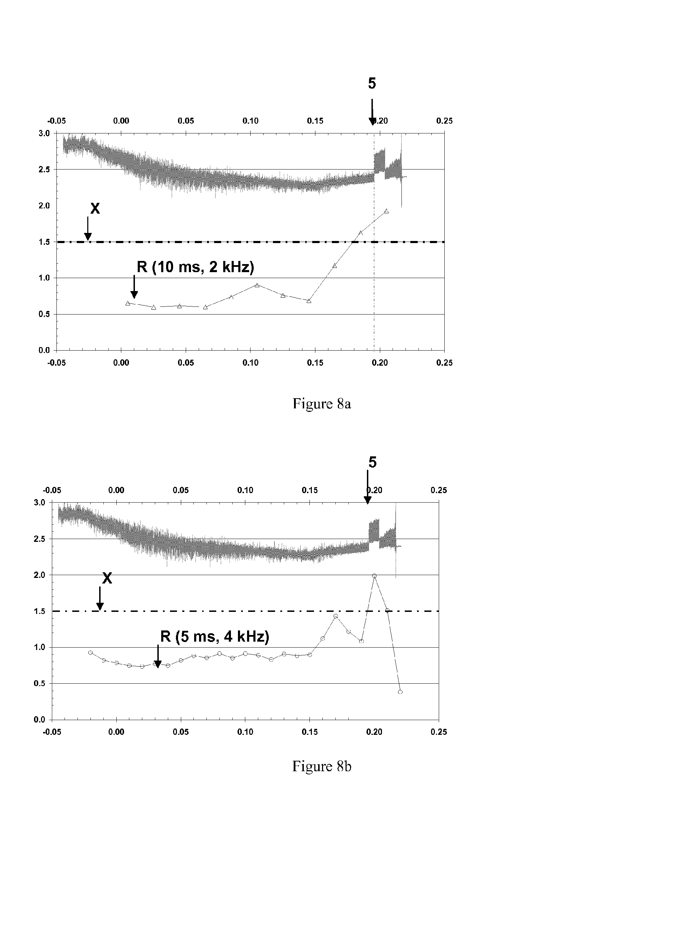

Les Figures 7 et 8a à 8d montrent des enregistrements de signaux effectués au cours de l'extinction de l'arc électrique d'une torche à plasma d'arc 10.

Pour chaque Figure, la première courbe en partant du haut illustre l'évolution temporelle des valeurs intermédiaires de la différence de potentiel électrique mesurées entre l'électrode 1 et la tuyère amont 2, et ce à une fréquence d'acquisition de 100 kHz.

Les signaux R résultent du procédé de détermination du front de montée illustré sur la Figure 6a, c'est-à-dire l'évolution temporelle du rapport $D(T_i)/D(T_{i-2})$, les valeurs $D(T_{i-2})$, $D(T_i)$, ... résultant de moyennes des valeurs intermédiaires. Ces signaux sont obtenus avec différents couples de fréquence d'acquisition et de valeurs de période temporelle $T_i$, conduisant à la réalisation de moyennes sur N=20 points. Les signaux R sont notés R ($T_i$, fréquence d'acquisition). Etant précisé que les périodes temporelles successives $T_{i-2}$, $T_{i-1}$, $T_i$ sont égales.

A titre d'exemple, le signal R(1 ms, 20 kHz) de la Figure 7 a été obtenu en effectuant des moyennes de valeurs intermédiaires sur des périodes temporelles successives d'une durée de 1 ms de valeurs intermédiaires de la différence de potentiel mesurée à une fréquence d'acquisition de 20 kHz. Ce couple de paramètres conduit bien à effectuer chaque moyenne sur 20 mesures intermédiaires de différence de potentiel.

Au vu des enregistrements de la Figure 7, on constate que le traitement du signal basé sur le rapport des moyennes et décrit sur la Figure 6a requiert une fréquence d'acquisition des valeurs intermédiaires de la différence de potentiel entre l'électrode 1 et la tuyère amont 2 minimale de l'ordre d'au moins 4 kHz pour détecter de manière fiable et reproductible le front de montée 5.

En effet, moins la fréquence d'acquisition est élevée, moins le front de monté est marqué. Il disparaît complètement à 1 kHz, ce qui conduit à une prédiction de l'apparition du front de montée 5 de la différence de potentiel entre l'électrode 1 et la tuyère amont 2 qui n'est pas fiable. A 2 kHz, la prédiction a environ 4.5 ms de retard. Ceci engendre une usure de la tuyère qui, répétée plusieurs centaines de fois, conduit à une dégradation de la qualité de coupe.

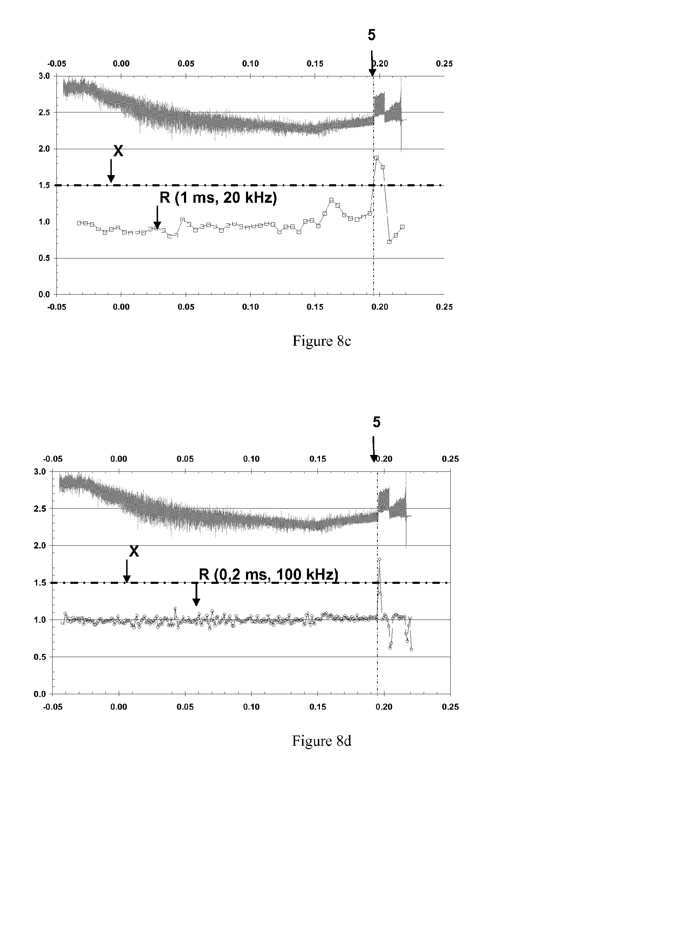

Les Figures 8a, 8b, 8c et 8d montrent des retards de détection du front de montée 5. Pour chaque Figure, le signal R correspondant à l'évolution temporelle du rapport des moyennes $D(T_i)/D(T_{i-2})$ pour différentes valeurs de périodes temporelles sur lesquelles effectuer la moyenne $D(T_i)$, i. e. 10, 5, 1 et 0, 2 ms, avec des fréquences d'acquisition des valeurs intermédiaires de différence de potentiel à moyenner de 2, 4, 20 et 100 kHz respectivement, toujours selon la méthode illustrée sur la Figure 6a. Un seuil X égal à 1, 5 est représenté par la ligne horizontale en pointillés.

Les valeurs de ces retards sont reportées dans le tableau suivant, en fonction des paramètres période temporelle et fréquence d'acquisition utilisés. Les essais réalisés ont montré que la fréquence minimale d'acquisition requise pour assurer un traitement du signal fiable et suffisamment rapide était de 4 kHz.

Tableau

| Fréquence d'acquisition | Période temporelle | Retard |
|---|---|---|
| [kHz] | [ms] | [ms] |
| 1 | 20 | Mauvaise prédiction |
| 2 | 10 | 4.5 |

(suite)

| Fréquence d'acquisition | Période temporelle | Retard |
|---|---|---|
| 4 | 5 | 2 |
| 20 | 1 | 1 |
| 100 | 0,2 | 0.5 |

La présente invention propose donc un procédé qui permet de détecter de manière fiable et précise le moment auquel la pression dans la chambre d'arc est suffisamment basse pour limiter l'usure des consommables mais suffisamment haute pour éviter l'accrochage de l'arc sur les parois de la chambre d'arc et auquel doit être déclenché l'arrêt du courant d'alimentation d'une torche à plasma d'arc au cours de la phase d'extinction de l'arc électrique au sein de ladite torche, permettant ainsi d'améliorer la durée de vie des consommables de la torche.

Avec le procédé de la présente invention, ce moment est défini indépendamment de la configuration et/ou des paramètres de fonctionnement de la torche à plasma d'arc utilisée et ne nécessite pas de définir des paramètres d'extinction de l'arc prédéterminés. La méthode est donc flexible, ce qui facilite sa mise en oeuvre au plan industriel.

Le procédé de la présente invention est applicable dans tout procédé de coupage par plasma d'arc d'une pièce métallique et permet de garantir des performances de coupe durables grâce à l'optimisation de la durée de vie des consommables de la torche à plasma d'arc utilisée pour ce procédé.

De plus, le procédé de la présente invention peut être mis en oeuvre aisément dans tout type d'installation de coupage par plasma d'arc, dès lors que celle-ci comprend des moyens de mesure de la différence de potentiel entre l'électrode et la tuyère amont de la torche à plasma d'arc utilisée, lesquels moyens sont reliés électriquement à des moyens d'acquisition et de traitement de signal apte à et conçus pour détecter un front de montée 5 de la différence de potentiel entre l'électrode 1 et la tuyère amont 2, lesdits moyens d'acquisition et de traitement de signal étant reliés électriquement à l'alimentation en courant de la torche à plasma pour déclencher l'arrêt de ce courant d'alimentation dès la détection du front de montée 5.

**Revendications**

**1.** Procédé de contrôle de l'extinction de l'arc électrique d'une torche à plasma d'arc (10), laquelle torche à plasma d'arc (10) est alimentée en courant électrique et comprend une électrode (1) et une tuyère amont (2) entre lesquelles est établie ou lesquelles sont soumises à au moins une différence de potentiel électrique et formant entre elles une chambre d'arc (3) alimentée en gaz plasmagène (4), comprenant les étapes de :

   a) couper l'alimentation en gaz plasmagène (4) de la chambre d'arc (3),
   b) faire s'échapper le gaz plasmagène (4) en amont de la chambre d'arc (3),
   c) diminuer progressivement l'intensité du courant d'alimentation de la torche à plasma d'arc (10),
   **caractérisé en ce qu'**il comprend en outre les étapes de :
   d) mesurer plusieurs valeurs ($D(T_{i-2})$, $D(T_{i-1})$, $D(T_i)$...) de différence de potentiel électrique entre l'électrode (1) et la tuyère amont (2) pendant plusieurs périodes temporelles successives ($T_{i-2}$, $T_{i-1}$, $T_i$...),
   e) comparer au moins une première valeur $D(T_i)$ mesurée pendant la période $T_i$ avec au moins une deuxième valeur $D(T_{i-2})$ mesurée pendant la période $T_{i-2}$ et déterminer la présence d'un front de montée (5) de la différence de potentiel électrique entre l'électrode (1) et la tuyère amont (2), et
   f) déclencher l'arrêt du courant d'alimentation de la torche (10) dès la détermination d'un front de montée (5) de la différence de potentiel électrique entre l'électrode (1) et la tuyère amont (2).

**2.** Procédé selon la revendication précédente, **caractérisé en ce que** l'on détermine la présence d'un front de montée (5) de la différence de potentiel électrique entre l'électrode (1) et la tuyère amont (2) lorsque le rapport $D(T_i)/D(T_{i-2})$ est supérieur ou égal à un seuil de détection prédéterminé X.

**3.** Procédé selon l'une des revendications précédentes, **caractérisé en ce que** le seuil de détection X est au moins égal à 1,1, de préférence au moins égal à 1,5.

**4.** Procédé selon l'une des revendications précédentes, **caractérisé en ce que** l'on détermine la présence d'un front de montée (5) de la différence de potentiel électrique entre l'électrode (1) et la tuyère amont (2) lorsque le rapport $D(T_i) - D(T_{i-2})/(T_i - T_{i-2})$ est supérieur ou égal à un seuil de détection prédéterminé Y.

**5.** Procédé selon la revendication 4, **caractérisé en ce que** le seuil de détection Y est compris entre 100 et 10000, de préférence compris entre 200 et 7000.

**6.** Procédé selon l'une des revendications 4 ou 5, **caractérisé en ce que** le seuil de détection Y est compris entre 100 et 500, de préférence de l'ordre de 250, ou compris entre 4000 et 9000, de préférence de l'ordre de 6000.

**7.** Procédé selon l'une des revendications précédentes, **caractérisé en ce que** les périodes temporelles successives ($T_{i-2}$, $T_{i-1}$, $T_i$...) sont chacune comprises entre 0.1 et 10 ms, de préférence entre 1 et 5 ms.

**8.** Procédé selon l'une des revendications précédentes, **caractérisé en ce que** les valeurs de différence de potentiel ($D(T_{i-2})$, $D(T_{i-1})$, $D(T_i)$ ...) mesurées à l'étape d) résultent chacune d'une moyenne effectuée sur plusieurs valeurs intermédiaires ($d_{j-1}(T_i)$, $d_j(T_i)$, ...) de différence de potentiel électrique entre l'électrode (1) et la tuyère amont (2) mesurées pendant chaque période ($T_{i-2}$, $T_{i-1}$, $T_i$...).

**9.** Procédé selon l'une des revendications précédentes, **caractérisé en ce que** les valeurs intermédiaires ($d_{j-1}(T_i)$, $d_j(T_i)$, ...) de différence de potentiel entre l'électrode (1) et la tuyère amont (2) sont mesurées pendant chaque période ($T_{i-2}$, $T_{i-1}$, $T_i$...) à une fréquence d'acquisition d'au moins 4 kHz.

**10.** Procédé selon l'une des revendications précédentes, **caractérisé en ce que** l'intensité du courant d'arc électrique est diminuée selon une rampe.

**11.** Procédé selon l'une des revendications précédentes, **caractérisé en ce que** les étapes a), b) et c) débutent simultanément.

**12.** Procédé selon l'une des revendications précédentes, **caractérisé en ce que** les étapes d), e) et f) commencent avec au moins une des étapes a), b) et c).

**13.** Procédé de coupage par plasma d'arc d'une pièce métallique, dans lequel on découpe une pièce métallique au moyen d'un plasma d'arc généré par une torche à plasma d'arc (10), **caractérisé en ce qu'**une fois la découpe de la pièce métallique achevée, on met en oeuvre le procédé de contrôle de l'extinction de l'arc électrique selon l'une des revendications précédentes pour éteindre l'arc électrique de la torche à plasma d'arc (10).

**14.** Installation automatique de coupage par plasma d'arc comprenant une alimentation en courant, une source de gaz plasmagène (4), une torche à plasma d'arc (10) comprenant une électrode (1) et une tuyère amont (2) entre lesquelles est établie une différence de potentiel et formant entre elles une chambre d'arc (3) alimentée en gaz plasmagène (4), et un système de gestion de l'alimentation de la torche à plasma d'arc (10) en gaz plasmagène (4), ledit dispositif étant relié fluidiquement à la source de gaz plasmagène (4) et comprenant un dispositif de régulation (11) du débit et/ou de la pression de gaz plasmagène alimentant la torche (10), au moins un conduit (12) d'amenée du gaz plasmagène (4) jusqu'à la chambre d'arc (3), un dispositif d'admission (6) de gaz plasmagène (4) agencé en amont de la torche à plasma d'arc, et un dispositif d'échappement (7) de gaz plasmagène (4) agencé entre le dispositif d'admission (6) de gaz plasmagène (4) et la chambre d'arc (3),
**caractérisé en ce qu'**elle comprend en outre des moyens de mesure de la différence de potentiel entre l'électrode (1) et la tuyère amont (2) reliés électriquement à des moyens d'acquisition et de traitement de signal apte à et conçus pour détecter un front de montée (5) de la différence de potentiel entre l'électrode (1) et la tuyère amont (2) et déclencher l'arrêt du courant d'alimentation de la torche à plasma d'arc (10).

Figure 1

Figure 2

Figure 3

Figure 4

Figure 5

Figure 6a                                    Figure 6b

R (0,2 ms, 100 KHz)

R (1 ms,  20 KHz)

R (5 ms,  4 KHz)

R (10 ms,  2 KHz)

R (20 ms,  1 KHz)

t (s)

Figure 7

Figure 8a

Figure 8b

Figure 8c

Figure 8d

Europäisches
Patentamt

European
Patent Office

Office européen
des brevets

## RAPPORT DE RECHERCHE EUROPEENNE

Numéro de la demande

EP 13 15 2493

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | US 5 070 227 A (LUO LIFENG [US] ET AL) 3 décembre 1991 (1991-12-03) * abrégé; figures 1A,1C,1D * * colonne 3, ligne 19-69 * * colonne 7, ligne 39 - colonne 8, ligne 18 * ----- | 1-14 | INV. H05H1/36 H05H1/34 B23K10/00 |
| A | US 6 093 905 A (HARDWICK STEVEN F [US] ET AL) 25 juillet 2000 (2000-07-25) * abrégé; figures 1-4 * * colonne 2, ligne 15-62 * ----- | 1-14 | |
| A | US 2002/185477 A1 (HARDWICK STEVEN F [US]) 12 décembre 2002 (2002-12-12) * abrégé; figure 3 * * alinéas [0041], [0050] * ----- | 1-14 | |
| A | EP 1 845 758 A2 (KOIKE SANSO KOGYO KK [JP]) 17 octobre 2007 (2007-10-17) * abrégé * * alinéas [0005], [0009] - [0014] * ----- | 1-14 | DOMAINES TECHNIQUES RECHERCHES (IPC) H05H B23K |

Le présent rapport a été établi pour toutes les revendications

| Lieu de la recherche | Date d'achèvement de la recherche | Examinateur |
|---|---|---|
| La Haye | 7 mars 2013 | Crescenti, Massimo |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
 
& : membre de la même famille, document correspondant

EPO FORM 1503 03.82 (P04C02)

**EP 2 645 825 A1**

**ANNEXE AU RAPPORT DE RECHERCHE EUROPEENNE
RELATIF A LA DEMANDE DE BREVET EUROPEEN NO.**

EP 13 15 2493

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-03-2013

| Document brevet cité au rapport de recherche | | Date de publication | Membre(s) de la famille de brevet(s) | | Date de publication |
|---|---|---|---|---|---|
| US 5070227 | A | 03-12-1991 | AU | 654949 B2 | 01-12-1994 |
| | | | CA | 2081457 A1 | 25-10-1991 |
| | | | DE | 69125934 D1 | 05-06-1997 |
| | | | DE | 69125934 T2 | 13-11-1997 |
| | | | EP | 0524970 A1 | 03-02-1993 |
| | | | JP | 3100157 B2 | 16-10-2000 |
| | | | JP | H05507237 A | 21-10-1993 |
| | | | US | 5070227 A | 03-12-1991 |
| | | | US | 5170033 A | 08-12-1992 |
| | | | WO | 9116164 A1 | 31-10-1991 |
| US 6093905 | A | 25-07-2000 | AUCUN | | |
| US 2002185477 | A1 | 12-12-2002 | AUCUN | | |
| EP 1845758 | A2 | 17-10-2007 | CN | 101056494 A | 17-10-2007 |
| | | | EP | 1845758 A2 | 17-10-2007 |
| | | | JP | 2007275971 A | 25-10-2007 |
| | | | KR | 20070101127 A | 16-10-2007 |

EPO FORM P0460

Pour tout renseignement concernant cette annexe : voir Journal Officiel de l'Office européen des brevets, No.12/82

19

**EP 2 645 825 A1**

## RÉFÉRENCES CITÉES DANS LA DESCRIPTION

**Documents brevets cités dans la description**

- US 5070227 A